# EUROPÄISCHE PATENTSCHRIFT

(11) **EP 0 614 718 B1**
(45) Veröffentlichungstag und Bekanntmachung des Hinweises auf die Patenterteilung: **09.04.1997**
(21) Anmeldenummer: 94101432.6
(22) Anmeldetag: 01.02.1994
(51) Int. Cl.: B23C 5/22

(54) **Planfräser**
Face-milling cutter
Fraise

(30) Priorität: 11.02.1993 DE 4304071
(43) Veröffentlichungstag der Anmeldung: 14.09.1994
(73) Patentinhaber: Wilhelm Fette GmbH, D-21493 Schwarzenbek (DE)
(72) Erfinder: Oppelt, Klaus, D-21481 Lauenburg (DE)
(74) Vertreter: Patentanwälte Hauck, Graalfs, Wehnert, Döring, Siemons

(56) Entgegenhaltungen:
- DE-A- 2 549 930
- DE-U- 8 808 312
- US-A- 3 805 349

## Beschreibung

Die Erfindung bezieht sich auf einen Planfräser mit einem Werkzeughalter und mindestens einer in 45°-Anordnung angebrachten Fräswendeplatte nach dem Oberbegriff des Patentanspruchs 1.

Aus "ISCAR FRÄSEN" Firmenschrift vom September 1987 ist ein Planfräser der eingangs genannten Art bekanntgeworden. Die Fräswendeplatten sind unter einem axialen und radialen Spanwinkel von je 0° eingebaut. Hierdurch ergibt sich für Wendeplatten eine relativ lange Spankammer. Die Spankammer wird durch Fräsbearbeitung hergestellt. Eine lange Spankammer erfordert mithin eine aufwendige Fräsbearbeitung, für die lange Fräswerkzeuge einzusetzen sind. Lange Spankammern haben außerdem den Nachteil, daß sie die Teilung nach oben signifikant beschränken.

Aufgrund der Anordnung der Wendeplatten ergibt sich bei den bekannten Planfräsern ein verhältnismäßig großer Momentenarm der Schneidkante gegenüber der Auflagefläche. Es besteht daher Gefahr, daß es zu Brüchen kommt. Wird die Wendeplatte durch ein mittiges Loch mittels einer Schraube am Plattensitz gehalten, ergibt sich bei den bekannten Wendeplatten ein relativ geringer Querschnitt, was in einer relativ kleinen Festigkeit der Wendeplatte resultiert.

Der Erfindung liegt die Aufgabe zugrunde, einen Planfräser zu schaffen, der mit geringem Aufwand gefertigt werden kann, bei dem die Fräswendeplatte bei hoher Eigenstabilität eine gute Abstützung erhält und der gleichwohl gute Schneideigenschaften aufweist.

Diese Aufgabe wird durch die Merkmale des Patentanspruchs 1 gelöst.

Aus der US 4 934 880 ist zwar ein Umfangsfräser bekanntgeworden, bei dem die Schneidplatten radial stark negativ gestellt sind, um eine einfachere Herstellung der Spanmulden zu erlauben. Außerdem wird eine kleinere Teilung möglich. Der effektive Spanwinkel ist jedoch Null oder geringfügig positiv.

Aus der DE 26 26 335 A1 ist auch ein Eckfräser bekanntgeworden, bei dem die Fräswendeplatten unter negativem axialem und radialem Spanwinkel angeordnet sind. Ein positiver effektiver Spanwinkel wird durch Nuten in der Spanfläche erhalten. Bei dem bekannten Eckfräser werden die Fräswendeplatten durch Spannkeile am Werkzeughalter gehalten.

Bei dem erfindungsgemäßen Planfräser werden sehr große negative Axial- und Radialwinkel verwendet und gleichwohl ein relativ großer positiver effektiver Spanwinkel erhalten. Trotz des großen effektiven Spanwinkels ergibt sich für die Wendeplatten ein stabiler Querschnitt, da die Seitenflächen (Freiflächen) rechtwinklig zur Auflagefläche verlaufen können. Die Spankammern des Werkzeughalters sind relativ kurz. Sie können daher mit relativ kurzen Fräswerkzeugen eingearbeitet werden, was den Herstellungsaufwand klein hält. Die Geometrie der Spankammern ermöglicht darüber hinaus eine kleinere Teilung des Planfräsers, d.h. eine höhere Schneidenzahl. Schließlich können die Bohrungen im Werkzeughalter zur Befestigung der Wendeplatten verhältnismäßig lang ausgeführt werden. Dadurch wird die Sicherheit des Plattensitzes weiter erhöht.

Trotz der extremen Negativstellung der Fräswendeplatte werden hervorragende Schnittverhältnisse erhalten. Überraschenderweise bilden sich keine kleinen spiralförmigen Späne, die einen Spanstau verursachen und das Werkstück möglicherweise zerkratzen könnten. Vielmehr erfolgt eine unbehinderte Spanbildung.

Ein Ausführungsbeispiel der Erfindung wird nachfolgend anhand von Zeichnungen näher erläutert.
- Fig. 1: zeigt schematisch die Seitenansicht eines Planfräsers nach der Erfindung.
- Fig. 2: zeigt eine ähnliche Darstellung wie Fig. 1 sowie die Schnitte 0-0, F-F und P-P durch diese Darstellung.
- Fig. 3: zeigt eine ähnliche Schnittdarstellung wie 0-0 nach Fig. 2 in vergrößertem Maßstab.
- Fig. 4: zeigt eine ähnliche Schnittdarstellung wie Fig. 3, jedoch für einen Fräser nach dem Stand der Technik.

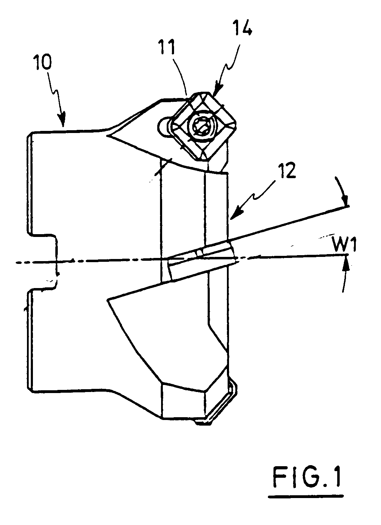

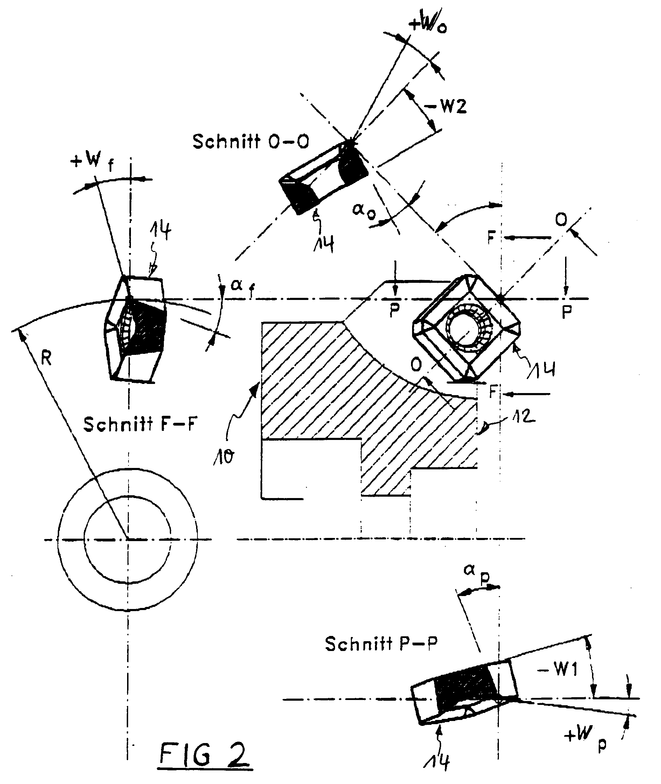

In Fig. 1 ist ein Planfräser 10 dargestellt, der einen Werkzeughalter 12 aufweist sowie Vierkant-Fräswendeplatten 14, die in 45°-Anordnung angebracht sind. Aus Fig. 1 ergibt sich, daß die Fräswendeplatten 14 mit einem negativen Axial- oder Rückwinkel W1 angeordnet sind. Aus Fig. 2 ergibt sich, daß auch der Radial- oder Seitenwinkel W2 negativ ist. Der effektive Spanwinkel W_{f}, Wₒ, Wₚ ist in allen Schnittebenen positiv.

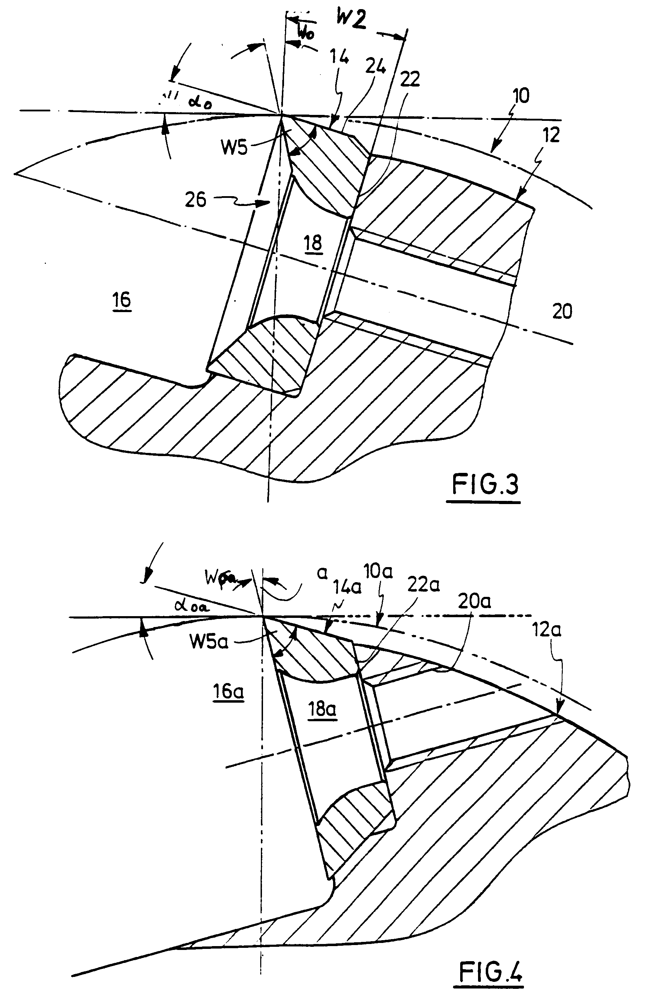

Die geometrischen Verhältnisse des Fräsers ergeben sich klarer aus Fig. 3. Der Plattensitz mit rechtwinklig angeordneten Sitzflächen ist in einer Spankammer 16 ausgebildet. Die Fräswendeplatte 14 wird mittels einer mittigen Durchbohrung 18 und einem entsprechenden Schraubenbolzen 11 (Fig. 1 und 2) in einer Gewindebohrung 20 des Werkzeughalters 12 befestigt. Wie erkennbar, verläuft die Auflagefläche 22 der Wendeplatte 14 annähernd im rechten Winkel zu den Seitenflächen 24 der Wendeplatte. Bei einem Spanwinkel Wₒ, W_{f}, Wₚ von 15° und einem Keilwinkel von 60 oder 70° ergibt sich eine tiefe Spanmulde 26. Die Freiwinkel in allen Schnittebenen sind mit αₒ, α_{f},αₚ bezeichnet.

In Fig. 4 ist bei ähnlicher Schneidengeometrie (positiver Spanwinkel) eine Fräswendeplatte mit Werkzeughalter nach dem Stand der Technik dargestellt. Es werden die gleichen Bezugszeichen wie in Fig. 3 verwendet, wobei jedoch ein Index a hinzugefügt ist.

Vergleicht man die Fräser nach den Figuren 3 und 4 ergeben sich folgende Unterschiede.

Die Fräswendeplatte 14a ist mit positivem Radial- und Axialwinkel angeordnet. Dadurch ergibt sich ein deutlich geringer Querschnitt der Wendeplatte 14a, was die Festigkeit beeinträchtigt. Ferner ist die Auflagefläche 22a deutlich geringer als die Auflagefläche 22, so daß im ersteren Fall eine weniger sichere Plattenanlage erhalten wird. Obwohl gleiche Keilwinkel W5, W5a vorliegen, ist wegen des ungünstigeren Momentenarms die Schneidkante der Wendeplatte 14a stärker auf Bruch belastet. Die Anordnung der Wendeplatte 14 nach Fig. 3 läßt im übrigen ein längeres Gewinde 20 zu als das Gewinde 20a nach Fig. 4.

Die Spankammer 16a ist deutlich länger als die Spankammer 16. Zur Bearbeitung der Spankammer 16 sind daher kürzere Werkzeuglängen möglich, was die Herstellung vereinfacht und verkürzt. Außerdem ermöglicht eine kürzere Spankammer 16 eine größere Teilung.

Der gezeigte erfindungsgemäße Planfräser ist besonders für die Fräsbearbeitung von weichen Baustählen, nicht rostenden Stählen, Titanwerkstoffe bis hin zu Vergütungsstählen, wie z.B. 42 CrMo4 geeignet. Außerdem ermöglicht er ein axiales Eintauchen in das Werkstück.

## Patentansprüche

1. Planfräser mit einem Werkzeughalter und mindestens einer in 45°-Anordnung angebrachten Fräswendeplatte, die in einer einen Plattensitz aufweisenden in Drehrichtung offenen Spankammer des Werkzeughalters angeordnet ist und mit einer in einer Gewindebohrung im Plattensitz einschraubbaren Schraube zur Befestigung der Fräswendeplatte über ein mittiges Loch, wobei die Fräswendeplatte an den Schneidkanten Spanmulden aufweist, dadurch gekennzeichnet, daß die Fräswendeplatte (14) zusammen mit dem Plattensitz so ausgebildet ist, daß ein negativer radialer Winkel (W2) des Plattensitzes, ein negativer axialer Winkel (W1) des Plattensitzes und ein positiver effektiver Spanwinkel (Wₒ) jeweils 12 bis 18°, vorzugsweise 15°, beträgt.

2. Planfräser nach Anspruch 1, dadurch gekennzeichnet, daß die ebene Auflagefläche (22) der Fräswendeplatte (14a) zur ebenen Freifläche einen Win-kel von etwa 90° aufweist.

3. Planfräser nach Anspruch 1 oder 2, dadurch gekennzeichnet, daß die Fräswendeplatte ein mittiges Loch (18) aufweist zur Befestigung mittels Schraubenbolzen, der in eine Gewindebohrung (20) des Werkzeughalters (12) eingreift.

## Claims

1. A face-milling cutter including a tool holder and at least one indexable milling insert mounted in a 45° assembly, which indexable milling insert is disposed in a chip chamber of the tool holder which includes an insert seat and is open in the direction of rotation, and a bolt adapted to be screwed into a threaded bore within the insert seat for fixing the indexable milling insert by means of a central hole, the indexable milling insert including chip grooves along the cutting edges, characterized in that the indexable milling insert (14) along with the insert seat is arranged such that a negative radial angle (W2) of the insert seat, a negative axial angle (W1) of the insert seat and a positive effective rake angle (Wₒ) each are 12 to 18°, preferably 15°.

2. A face-milling cutter according to claim 1, characterized in that the plane support surface (22) of the indexable milling insert (14a) and the plane flank surface include an angle of about 90°.

3. A face-milling cutter according to claim 1 or claim 2, characterized in that the indexable milling insert includes a central hole (18) for being mounted by means of a threaded bolt which engages into a threaded bore (20) of the tool holder (12).

## Revendications

1. Fraise en bout comprenant un porte-outil et au moins une plaquette réversible de fraisage, montée suivant un agencement à 45°, qui est disposée dans une chambre à copeaux du porte-outil qui comporte un siège de plaquette et est ouverte dans le sens de rotation, et comprenant une vis qui est agencée de façon à pouvoir être vissée dans un alésage fileté pratiqué dans le siège de plaquette et qui sert à la fixation de la plaquette réversible de fraisage au moyen d'un trou central, tandis que la plaquette réversible de fraisage comporte des logements de copeaux à l'endroit des arêtes de coupe, caractérisée en ce que la plaquette réversible de fraisage (14) est réalisée, avec le siège de plaquette, de façon qu'un angle radial (W2) négatif du siège de plaquette, un angle axial (W1) négatif du siège de plaquette et un angle de coupe effectif (Wo) positif soient égaux chacun à 12 à 18°, de préférence 15°.

2. Fraise en bout selon la revendication 1, caractérisée en ce que la surface d'appui (22) plane de la plaquette réversible de fraisage (14a) fait un angle de 90° environ vis-à-vis de la face de dépouille plane.

3. Fraise en bout selon la revendication 1 ou 2, caractérisée en ce que la plaquette réversible de fraisage comporte un trou central (18) pour la fixation au moyen d'une vis qui se visse dans un alésage fileté (20) du porte-outil (12).
